# EUROPEAN PATENT APPLICATION

(11) **EP 4 676 037 A1**
(43) Date of publication of application: **07.01.2026**
(21) Application number: 24306082.9
(22) Date of filing: 02.07.2024
(51) Int. Cl.: H04N 19/11, H04N 19/176, H04N 19/593

(54) **DIMD AND OBIC HISTOGRAM ADAPTATION TO MIP MODES**

(71) Applicant: InterDigital CE Patent Holdings, SAS, 75017 Paris (FR)
(72) Inventor: NASER, Karam, 35250 MOUAZE (FR); BORDES, Philippe, 35890 LAILLE (FR); LE LEANNEC, Fabrice, 35830 BETTON (FR); CHEN, Ya, 35700 RENNES (FR)
(74) Representative: Interdigital

(57) **Abstract**

A method and an apparatus for encoding or decoding an image or a video are provided wherein, for at least one block of a video, at least one histogram of angular intra modes occurrences is obtained. For at least one angular intra mode, a bin value for the at least one angular intra mode in the at least one histogram depends on determining whether or not the at least one angular intra mode is mappable to a matrix-based intra mode. A prediction block for the block is determined based on an intra prediction mode that uses the at least one histogram, and the block is encoded or reconstructed using the prediction block.

## Description

### TECHNICAL FIELD

The present embodiments generally relate to video compression. The present embodiments relate to a method and an apparatus for encoding or decoding an image or a video. More particularly, the present embodiments relate to improving intra prediction in video compression system.

### BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

### SUMMARY

According to an aspect, a method for encoding an image or a video is provided. The method comprises, for at least one block of a video, obtaining at least one histogram of angular intra modes occurrences, wherein for at least one angular intra mode, a bin value for the at least one angular intra mode in the at least one histogram depends on determining whether or not the at least one angular intra mode is mappable to a matrix-based intra mode, determining a prediction block for the block based on an intra prediction mode that uses the at least one histogram, and encoding the block using the prediction block.

According to another aspect, an apparatus for encoding an image or a video is provided. The apparatus comprises one or more processors operable to, for at least one block of a video, obtain at least one histogram of angular intra modes occurrences, wherein for at least one angular intra mode, a bin value for the at least one angular intra mode in the at least one histogram depends on determining whether or not the at least one angular intra mode is mappable to a matrix-based intra mode, determine a prediction block for the block based on an intra prediction mode that uses the at least one histogram, encode the block using the prediction block.

According to an aspect, a method for decoding an image or a video is provided. The method comprises, for at least one block of a video, obtaining at least one histogram of angular intra modes occurrences, wherein for at least one angular intra mode, a bin value for the at least one angular intra mode in the at least one histogram depends on determining whether or not the at least one angular intra mode is mappable to a matrix-based intra mode, determining a prediction block for the block based on an intra prediction mode that uses the at least one histogram, decoding the block using the prediction block.

According to another aspect, an apparatus for decoding an image or a video is provided. The apparatus comprises one or more processors operable to, for at least one block of a video, obtain at least one histogram of angular intra modes occurrences, wherein for at least one angular intra mode, a bin value for the at least one angular intra mode in the at least one histogram depends on determining whether or not the at least one angular intra mode is mappable to a matrix-based intra mode, determine a prediction block for the block based on an intra prediction mode that uses the at least one histogram, decode the block using the prediction block.

Further embodiments that can be used alone or in combination are described herein.

One or more embodiments also provide a computer program comprising instructions which when executed by one or more processors cause the one or more processors to perform any one of the methods for encoding or decoding an image or a video according to any of the embodiments described herein. One or more of the present embodiments also provide a non-transitory computer readable medium and/or a computer readable storage medium having stored thereon instructions for encoding or decoding an image or a video according to the methods described herein.

One or more embodiments also provide a computer readable storage medium having stored thereon a bitstream generated according to the methods described herein. One or more embodiments also provide a method and apparatus for transmitting or receiving the bitstream generated according to the methods described above.

According to an aspect, a device is provided that comprises an apparatus for decoding an image or a video according to any one of the embodiments described above; and at least one of (i) an antenna configured to receive or transmit a signal, the signal including data representative of the image or video, (ii) a band limiter configured to limit the signal to a band of frequencies that includes the data representative of the image or video, or (iii) a display configured to display the image or video.

In a variant, the device comprises at least one of a television, a cell phone, a tablet, a set-top box.

### BRIEF DESCRIPTION OF THE DRAWINGS

FIG. 1A illustrates a block diagram of a system within which aspects of the present embodiments may be implemented according to an embodiment.
FIG. 1B illustrates a block diagram of a system within which aspects of the present embodiments may be implemented according to another embodiment.
FIG. 1C illustrates a block diagram of a system within which aspects of the present embodiments may be implemented according to another embodiment.
FIG. 2 illustrates a block diagram of an embodiment of a video encoder within which aspects of the present embodiments may be implemented.
FIG. 3 illustrates a block diagram of an embodiment of a video decoder within which aspects of the present embodiments may be implemented.
FIG. 4 illustrates an example of angular intra prediction modes in VVC.
FIG. 5 illustrates an example of non-adjacent spatial neighboring candidates for OBIC mode.

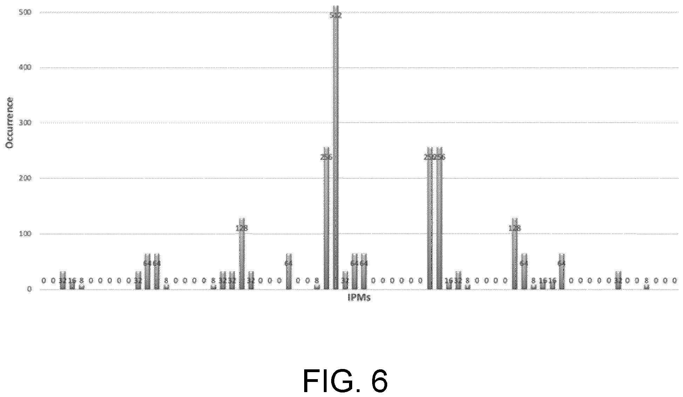

FIG. 6 illustrates an example of a histogram of occurrences (HoC) of IPM modes in a spatial neighborhood of a block.
FIG. 7 illustrates an example of a flowchart of a matrix-based intra prediction (MIP) mode.
FIG. 8 illustrates an example of a L shaped neighborhood for a block in another version of the MIP mode.
FIG. 9 illustrates an example of a method for encoding a block of a video according to an embodiment.
FIG. 10 illustrates an example of a method for decoding a block of a video according to an embodiment.
FIG. 11 illustrates an example of a method for obtaining a histogram of intra modes occurrences according to a variant.
FIG. 12 illustrates an example of a method for obtaining a histogram of intra modes occurrences according to another variant.
FIG. 13 illustrates an example of a method for obtaining a histogram of intra modes occurrences according to further variant.
FIG. 14 illustrates an example of a method for obtaining a prediction block in an intra prediction mode that uses a histogram of intra modes occurrences, according to a variant.
FIG. 15 shows two remote devices communicating over a communication network in accordance with an example of the present principles.
FIG. 16 shows the syntax of a signal in accordance with an example of the present principles.

### DETAILED DESCRIPTION

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

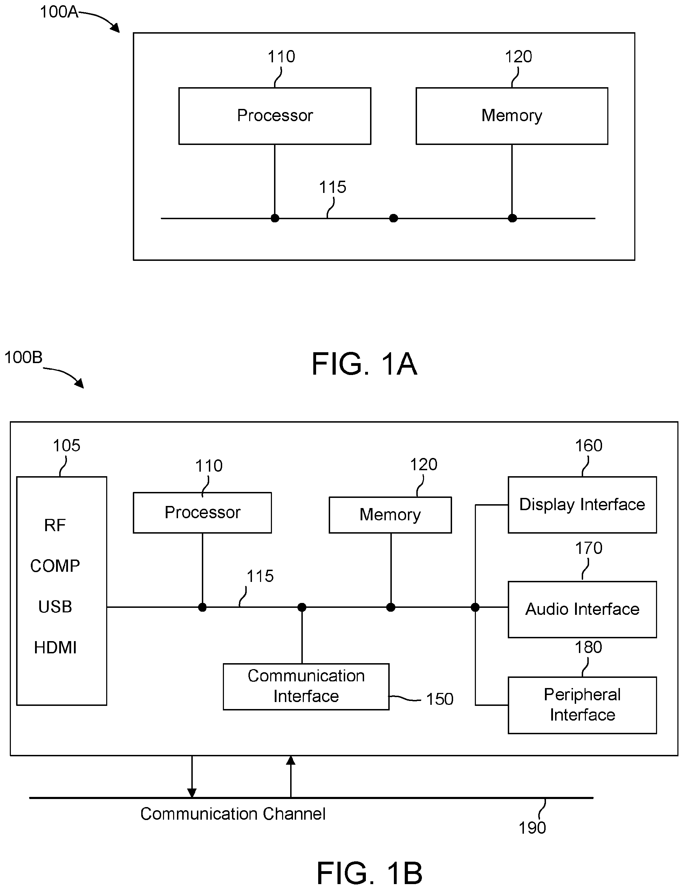

The aspects described and contemplated in this application can be implemented in many different forms. FIGs. 1A, 1B, 1C, 2 and 3 below provide some embodiments, but other embodiments are contemplated and the discussion of FIGs. 1A, 1B, 1C, 2 and 3 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

The present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

FIG. 1A-1C illustrates block diagrams of examples of systems in which various aspects and embodiments can be implemented. Any one of the systems 100A, 100B or 100B may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. In various embodiments, the system 100A, 100B or 100C is communicatively coupled to other systems, or to other electronic devices, via, for example, a communications bus or through dedicated input and/or output ports. In various embodiments, the system 100A, 100B or 100C is configured to implement one or more of the aspects described in this application.

FIG. 1A illustrates a block diagram of an example of a system in which various aspects and embodiments can be implemented. The system 100A includes at least one processor 110 configured to execute instructions loaded therein for implementing, for example, the various aspects described in this application. Processor 110 may include embedded memory, input output interface, and various other circuitries as known in the art. The system 100A includes at least one memory 120, e.g., a volatile memory device, and/or a non-volatile memory device, including, but not limited to, EEPROM, ROM, PROM, RAM, DRAM, SRAM, flash, magnetic disk drive, and/or optical disk drive. The memory 120 may include an internal storage device, an attached storage device, and/or a network accessible storage device, as non-limiting examples. The processor 110 may be interconnected to the memory 120 by an interconnection bus 115.

Program code to be loaded onto processor 110 to perform the various aspects described in this application is subsequently loaded onto memory 120 for execution by processor 110.

In some embodiments, memory inside of the processor 110 is used to store program code instructions and to provide working memory for processing that is needed during encoding or decoding. The input to the elements of system 100A may be provided through various input devices (not represented). Both Processor 110 and memory 120 can also have one or more additional interconnections to external connections.

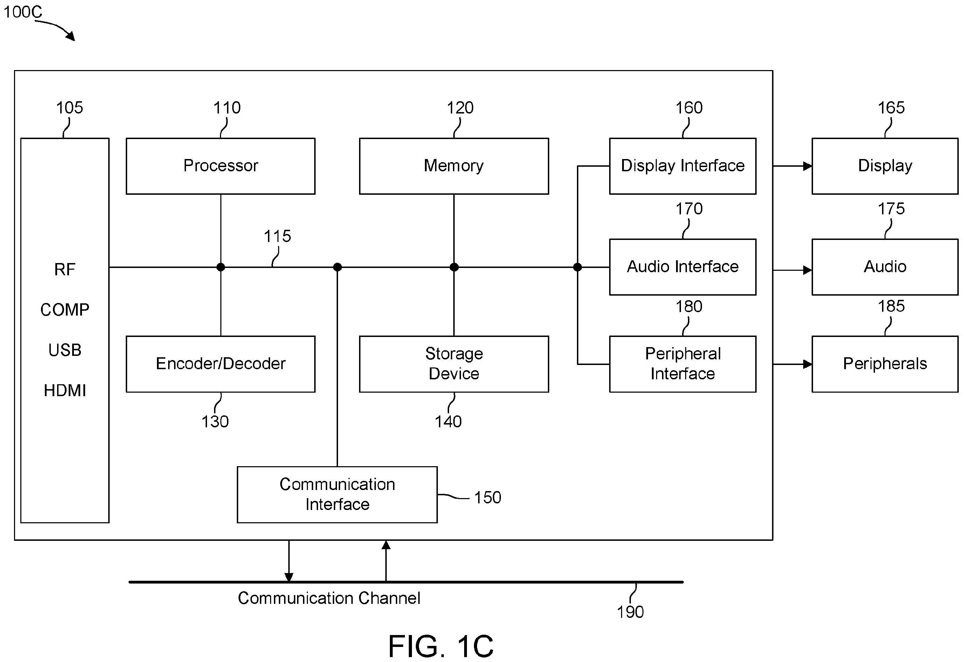

FIG. 1B illustrates a block diagram of an example of a system 100B in which various aspects and embodiments can be implemented. The system 100B includes the processor 110 and memory 120 as described in relation with FIG. 1A. The input to the elements of system 100B may be provided through various input devices as indicated in block 105 which is described further below with FIG. 1C. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B, include composite video.

The various elements may be interconnected and transmit data therebetween using suitable connection arrangement 115, for example, an internal bus as known in the art, including the I2C bus, wiring, and printed circuit boards.

The system 100B includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

The system 100B may provide an output signal to various output devices, including a display, speakers, and other peripheral devices. The output devices may be communicatively coupled to system 100B via dedicated connections through respective interfaces 160, 170, and 180. Alternatively, the output devices may be connected to system 100B using the communications channel 190 via the communications interface 150.

FIG. 1C illustrates a block diagram of an example of a system 100C in which various aspects and embodiments can be implemented according to another embodiment. Elements of system 100C, singly or in combination, may be embodied in a single integrated circuit, multiple Ics, and/or discrete components. For example, in at least one embodiment, the processing and encoder/decoder elements of system 100C are distributed across multiple Ics and/or discrete components.

The system 100C includes the processor 110 and memory 120 as described in relation with FIG. 1A or 1B.

System 100C includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100C includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100C or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input data (image, video, volumetric content), the decoded data (image, video, volumetric content) or portions of the decoded data, the bitstream, matrices, variables, and intermediate or final results from the processing of equations, formulas, operations, and operational logic.

In some embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for data encoding and decoding operations, such as for MPEG-2, HEVC (HEVC refers to High Efficiency Video Coding, also known as H.265 and MPEG-H Part 2), or VVC (Versatile Video Coding also known as H.266, standard developed by JVET, the Joint Video Experts Team).

The input to the elements of system 100C may be provided through various input devices as indicated in block 105, also mentioned in FIG. 1B. Such input devices of system 100B or 100C include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1B or 1C, include composite video.

In various embodiments, the input devices of block 105 in system 100B or 100C have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100B or 100C to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/decoder 130 operating in combination with the memory and storage elements to process the data stream as necessary for presentation on an output device.

Various elements of the systems 100A, 100B or 100C may be provided within an integrated housing, Within the integrated housing, the various elements may be interconnected and transmit data therebetween using the suitable connection arrangement 115, for example, an internal bus as known in the art, including the I2C bus, wiring, and printed circuit boards.

Similarly as for the system 100B of FIG. 1B, the system 100C includes communication interface 150 that enables communication with other devices via communication channel 190.

The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100B or 100C, in various embodiments, using a Wi-Fi network such as IEEE 802.11 (IEEE refers to the Institute of Electrical and Electronics Engineers). The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100B or 100C using a set-top box that delivers the data over the HDMI connection of the input block 105. Still other embodiments provide streamed data to the system 100B or 100C using the RF connection of the input block 105. As indicated above, various embodiments provide data in a non-streaming manner. Additionally, various embodiments use wireless networks other than Wi-Fi, for example a cellular network or a Bluetooth network.

The system 100C may provide an output signal to various output devices, including a display 165, speakers 175, and other peripheral devices 185. The display 165 of various embodiments includes one or more of, for example, a touchscreen display, an organic light-emitting diode (OLED) display, a curved display, and/or a foldable display. The display 165 can be for a television, a tablet, a laptop, a cell phone (mobile phone), or other devices. The display 165 can also be integrated with other components (for example, as in a smart phone), or separate (for example, an external monitor for a laptop). The other peripheral devices 185 include, in various examples of embodiments, one or more of a stand-alone digital video disc (or digital versatile disc) (DVR, for both terms), a disk player, a stereo system, and/or a lighting system. Various embodiments use one or more peripheral devices 185 that provide a function based on the output of the system 100C. For example, a disk player performs the function of playing the output of the system 100C.

In various embodiments, control signals are communicated between the system 100C and the display 165, speakers 175, or other peripheral devices 185 using signaling such as AV.Link, CEC, or other communications protocols that enable device-to-device control with or without user intervention. The output devices may be communicatively coupled to system 100C via dedicated connections through respective interfaces 160, 170, and 180. Alternatively, the output devices may be connected to system 100C using the communications channel 190 via the communications interface 150. The display 165 and speakers 175 may be integrated in a single unit with the other components of system 100C in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

In any of the systems 100A, 100B or 100C, the embodiments can be carried out by computer program product comprising code instructions that implements any one of embodiments described herein. The computer program product may be computer software implemented by the processor 110 or by hardware, or by a combination of hardware and software. As a non-limiting example, the embodiments can be implemented by one or more integrated circuits. The memory 120 of any one of the systems 100A, 100B or 100C can be of any type appropriate to the technical environment and can be implemented using any appropriate data storage technology, such as optical memory devices, magnetic memory devices, semiconductor-based memory devices, fixed memory, and removable memory, as non-limiting examples. The processor 110 of any one of the systems 100A, 100B or 100C can be of any type appropriate to the technical environment, and can encompass one or more of microprocessors, general purpose computers, special purpose computers, and processors based on a multi-core architecture, as non-limiting examples.

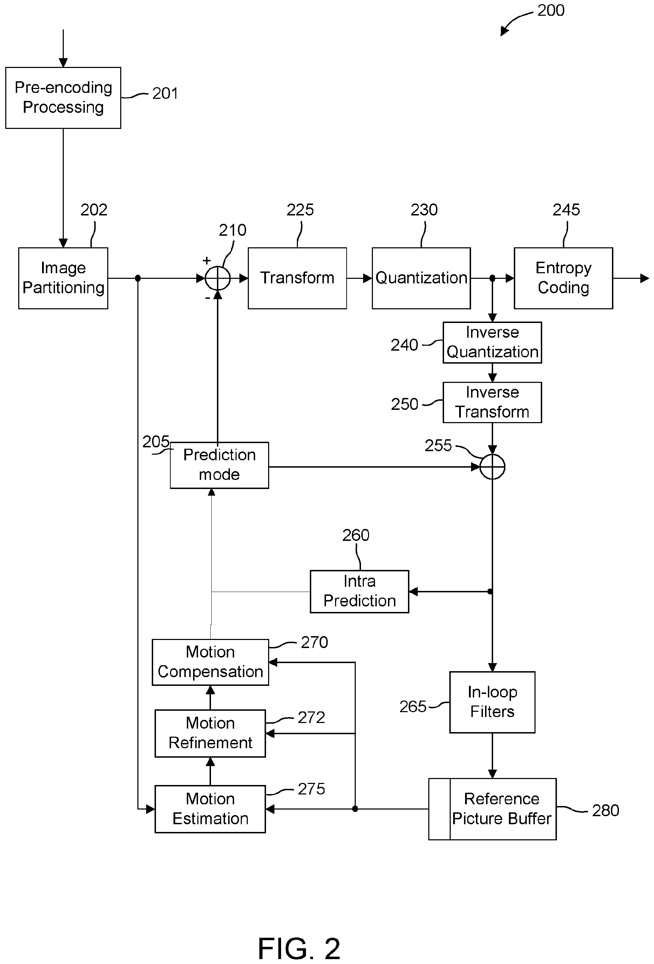

FIG. 2 illustrates an example of a block-based hybrid video encoder 200. Variations of this encoder 200 are contemplated, but the encoder 200 is described below for purposes of clarity without describing all expected variations.

In some embodiments, FIG. 2 also illustrate an encoder in which improvements are made to the HEVC standard or a VVC standard *(Versatile Video Coding, Standard ITU-T H.266, ISO*/*IEC 23090-3*, *2020)* or an encoder employing technologies similar to HEVC or VVC, such as an encoder ECM (Enhanced Compression Model) under development by JVET (Joint Video Exploration Team).

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of color components), or re-sizing the picture (ex: down-scaling). Metadata can be associated with the pre-processing and attached to the bitstream.

In the encoder 200, a picture is encoded by the encoder elements as described below. The picture to be encoded is partitioned (202) and processed in units of, for example, CUs (Coding units) or blocks. In the disclosure, different expressions may be used to refer to such a unit or block resulting from a partitioning of the picture. Such wording may be coding unit or CU, coding block or CB, luminance CB, or block. A CTU (Coding Tree Unit) refers to a group of blocks or group of units or group of coding units (CUs). In some embodiments, a CTU may be considered as a block, or a unit as itself.

Each unit is encoded using, for example, either an intra or inter mode. When a unit is encoded in an intra mode, it performs intra prediction (260). In an inter mode, motion estimation (275) and compensation (270) are performed. The intra mode and/or the inter mode may comprise several distinct sub-modes. For example, the intra mode may comprise directional intra predictions, template-based intra mode derivation prediction, intra block copy prediction or others modes spatially predicting the samples values of the unit. The inter mode may comprise skip mode, merge mode according to which motion information is derived from a list of motion candidates and no motion vector prediction residual is encoded, an inter mode according to which motion information is derived from a list of motion candidates and further refined either by encoding motion vector prediction residual or by template-matching performed both at the encoder and the decoder, further inter modes are also possible. The encoder decides (205) which one of the intra mode or inter mode to use for encoding the unit. When different intra modes and/or inter modes are possible, the encoder decides (205) which of the intra modes or inter modes to use. The encoder indicates the intra/inter decision by, for example, one or more syntax element signaling the prediction mode. The encoder may also blend (205) intra prediction result and inter prediction result, or blend results from different intra/inter prediction methods. Prediction residuals are calculated, for example, by subtracting (210) the predicted block from the original image block.

The motion refinement module (272) uses already available reference picture in order to refine the motion field of a block without reference to the original block. A motion field for a region can be considered as a collection of motion vectors for all pixels with the region. If the motion vectors are sub-block-based, the motion field can also be represented as the collection of all sub-block motion vectors in the region (all pixels within a sub-block have the same motion vector, and the motion vectors may vary from sub-block to sub-block). If a single motion vector is used for the region, the motion field for the region can also be represented by the single motion vector (same motion vectors for all pixels in the region).

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes (reconstructs) an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, one or more of a deblocking filtering, an SAO (Sample Adaptive Offset) filtering or an ALF (Adaptive Loop Filter) filtering to reduce encoding artifacts. The filtered image is stored at a reference picture buffer (280). Such filtered image is also referred to as a reference image in the following.

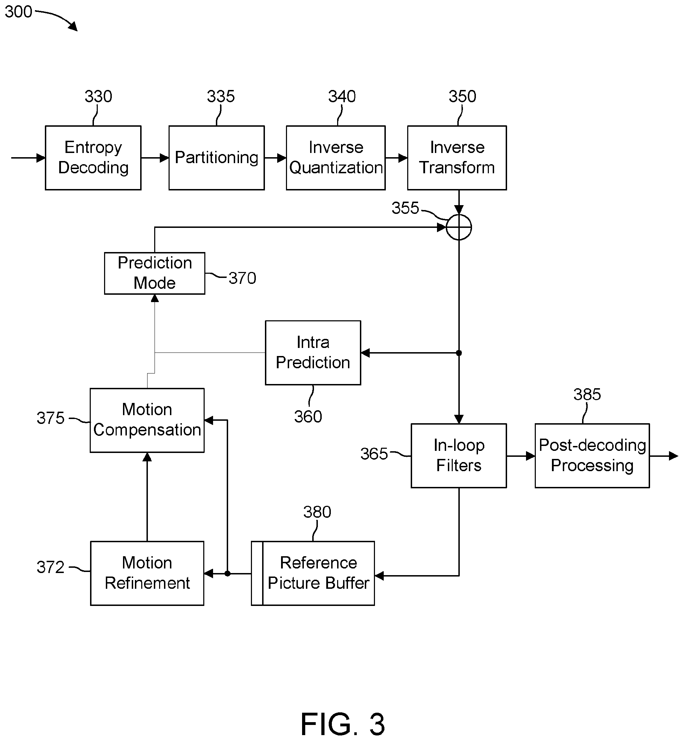

FIG. 3 illustrates a block diagram of a video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed.

The predicted block can be obtained (370) from intra prediction (360) or motion-compensated prediction (i.e., inter prediction) (375). In a similar manner as in the encoder, intra prediction and/or inter prediction may comprise several distinct sub-modes. The decoder obtains (370) the predictor block based on one or more syntax elements signaling the prediction mode among the available intra modes and inter modes. The decoder may blend (370) the intra prediction result and inter prediction result, or blend results from multiple intra/inter prediction methods. Before motion compensation, the motion field may be refined (372) by using already available reference pictures. In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201), or re-sizing the reconstructed pictures (ex: up-scaling). The post-decoding processing can use metadata derived in the pre-encoding processing and signaled in the bitstream.

Intra prediction in EMC 10 (Enhanced Compression Model 10) is implemented with the following intra prediction modes.

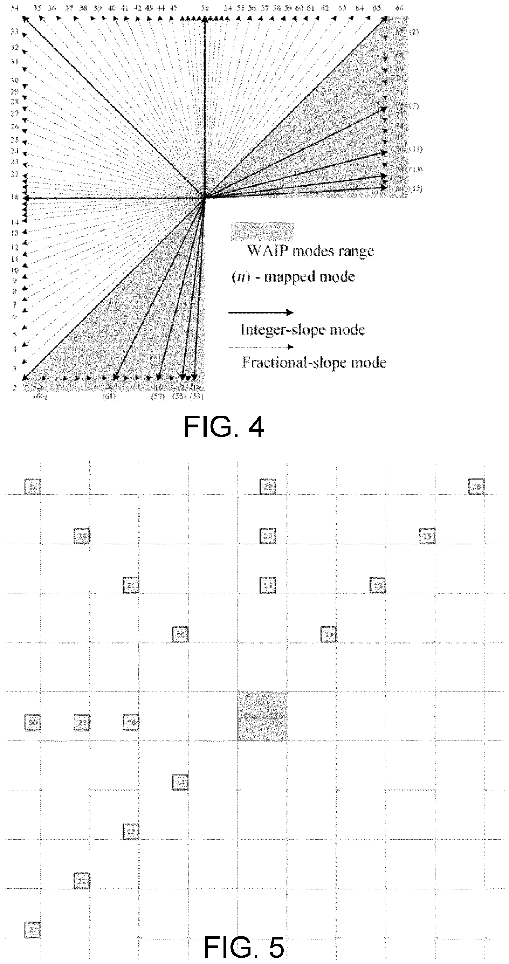

To capture the arbitrary edge directions presented in natural video, ECM features 65 directional intra prediction modes as in the VVC standard (*Versatile Video Coding, Standard ITU-TH. 266, ISO*/*IEC 23090-3, 2020).* For predicting blocks with smoothly varying textures, the PLANAR and DC modes are used. Directional intra prediction modes (IPM) as used in VVC are illustrated on FIG. 4, which also shows wide angular modes. These modes are also called in the document angular intra modes.

When DIMD (Decoder Side Intra Mode Derivation) is applied, up to five angular intra modes are derived from gradients determined in a template of reconstructed neighbor samples, and those five predictors are combined with the planar mode predictor with weights derived from the histogram of gradients.

When used, TIMD (Template-based Intra Mode Derivation) is applied the same way on the encoder and decoder sides. For each intra prediction mode in the MPM (Most Probable Modes) list of a current block to encode or decode, if needed, supplemented with default modes, a prediction of the template of the current block is determined from the decoded reference samples of the template, and the SATD (Sum of Absolute Transformed Differences) between this prediction and the template of the current block is calculated. The two intra prediction modes with the minimum SATDs are selected as the TIMD modes. These TIMD modes are combined using weights derived from the SATD costs.

Intra template matching prediction (IntraTMP) is an intra prediction mode that copies a prediction block from the reconstructed part of the current frame, whose L-shaped template most closely matches the current template (template of the current block). For a predefined search range, the encoder searches for the most similar template to the current template and uses the corresponding block as a prediction block. The encoder then signals the usage of this mode, and the same prediction operation is performed at the decoder side.

In Intra Block Copy (IBC), the prediction is obtained from a reference block within the same picture indicated by a block vector.

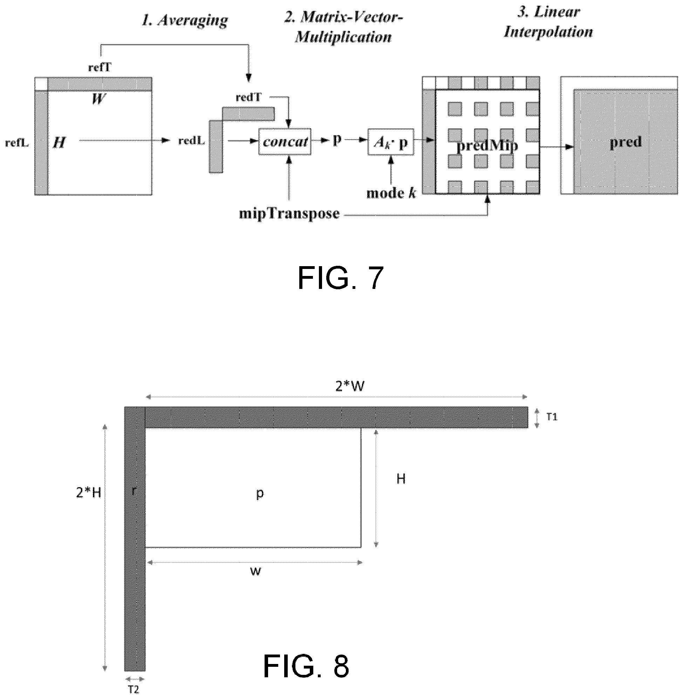

To predict the samples of a block of width W and height H, Matrix weighted Intra Prediction (MIP) takes one line of H reconstructed neighboring boundary samples left of the block and one line of W reconstructed neighboring boundary samples above the block as input. The generation of the prediction signal is based on averaging neighboring samples, matrix vector multiplication with the averaged samples and linear interpolation. An example of a flowchart for MIP mode as implemented in VVC is illustrated on FIG. 7.

Spatial geometric partitioning mode (SGPM) is an intra mode that resembles the inter coding tool of geometric partitioning mode (GPM), where the two prediction parts are generated from intra predicted process. In SGPM mode, a candidate list is built with each entry containing one partition split and two intra prediction modes. The candidate index selected from the list is signaled to the decoder.

ECM implements a usage of block vector in the DIMD, TIMD and SGPM.

In ECM, the block vectors obtained from neighboring blocks can be used in SGPM modes. Specifically, the template cost is used to select the best intra modes among the available angular intra modes and block-vector based modes. Specifically, up to 6 block vectors are obtained from neighboring blocks coded in IBC or IntraTMP. A candidate list of size 26 is constructed with 3 angular intra modes and 6 block-vector based prediction and predefined split direction. The template cost is employed to reorder the list and to obtain 16 best candidates. The candidate is selected in the list among the 16 best candidates and the index of the selected candidate is signaled to the decoder.

For DIMD, up to 5 angular intra modes are obtained from the histogram of oriented gradient of the reconstructed template. These five angular intra modes are blended with the planar mode or a block-vector based mode obtained from neighboring blocks. The template cost is employed to decide between planar and block-vector based predictor.

For TIMD, in JVET-AH0274 (*"*EE2 related: TIMD Merge Mode with Enhanced Block Vector Deployment", K. Naser, Y. Chen, F. Le Leannec, M. Radosavljevic, K. Reuze, 15 April 2024)*,* a combination of block-vector prediction and TIMD has been proposed. Specifically, the TIMD template analysis process is extended to include prediction using block-vectors from neighboring blocks coded in IBC or IntraTMP. In details, TIMD template analysis is performed to obtain up to 3 intra modes: one non-directional (planar or DC) and 2 directionals (angular intra modes). In JVET-AH0274, it is proposed to replace any of the three modes by block-vector based prediction depending on the template cost.

In JVET-AH0076 *("*EE2-2.2: Occurrence-based intra coding (OBIC) ", R. G. Youvalari, M. Abdoli, A. Tissier, 10 April 2024*),* Occurrence Based Intra Prediction (OBIC) has been proposed for ECM.

The occurrence-based intra coding (OBIC) derives the intra prediction modes of the current block based on the sample-wise occurrence of the angular intra modes in the spatial neighborhood of the block. For this, adjacent and non-adjacent spatial neighboring blocks are checked, and the angular intra prediction modes of the blocks are collected into an occurrence histogram. Instead of Histogram of Gradient (HoG) as in DIMD, the OBIC method uses the Histogram of occurrence (HoC), which consists of the angular intra modes and their sample-wise occurrences. The occurrence values are calculated based on the number of samples that are coded in a certain angular intra mode in that neighborhood. For example, if a uiWidth × uiHeight spatial neighboring block of the current block is coded with an IPM mode, the occurrence of the mode for this spatial neighboring block is given by uiWidth * uiHeight and its bin value in the histogram is calculated as: HoC[IPM] += uiWidth * uiHeight, where uiWidth and uiHeight are the width and height of the spatial neighboring block.

The occurrences of the existing modes from the spatial neighborhood blocks are accumulated into the histogram.

FIG. 5 shows an example of the non-adjacent spatial neighboring blocks that are used in OBIC mode's HoC generation.

Up to five angular intra modes with the highest occurrence along with the planar mode or block-vector based prediction (same as in DIMD) are selected from the HoC and used for obtaining the final prediction of the current block by blending the prediction of the selected modes.

It can happen that some neighboring blocks are coded using an intra prediction mode that uses more than one angular intra mode for obtaining the prediction. In such cases, all the angular intra modes used for predicting such neighboring blocks are taken into account when constructing the OBIC histogram. For example the intra prediction mode that uses more than one angular intra modes for obtaining the prediction can be the following modes:
DIMD uses up to 5 angular modes, TIMD uses up to 2 angular modes, SGPM uses 2 angular modes and OBIC uses up to 5 angular modes.

Moreover, the virtual intra prediction modes (VIPMs) of the following intra prediction modes are considered only in inter slices when creating the histogram of OBIC mode: MIP block, IntraTMP block, IBC block, EIP block (EIP stands for Extrapolation filter-based Intra Prediction).

The blending weights for OBIC are calculated in a similar manner as the DIMD mode, but instead of using gradient values from the template, the occurrence values are used for OBIC. Moreover, the planar mode's weight is also decided similarly to DIMD mode.

In JVET-AH0076, the OBIC mode is applied to only luma blocks. Moreover, the mode is disabled for blocks that have less than 64 samples.

Usage of the OBIC mode is signaled with a CABAC coded PU level flag. The OBIC mode is used as a sub-mode of DIMD and its flag is signaled after the flag signaling the DIMD mode.

In JVET-AH0209 *("*EE2-2.13: Matrix based intra prediction replacing conventional intra modes", B. Ray, H. Wang, P. Garus, V. Seregin, M. Karczewicz, S. Eadie, G. Verba, 10 April 2024*),* a new MIP mode is proposed, also called in the following MIP2. For MIP2, a new matrix of weights (similar to the MIP mode of ECM/VVC) is defined for certain block dimensions. The MIP2 mode also replaces some of the conventional intra modes (angular intra modes) for the block having these dimensions. The weights are multiplied by the neighbor reference template to derive the prediction samples. The weights are applied to the reference samples of the L shaped causal neighborhood template as shown in FIG. 8.

For convention, this mode is named here MIP2, to be distinguished from the default MIP mode.

The MIP2 prediction is used for block size with both width and height up to 32, that is for any block having a width going from 4 to 32 and a height going from 4 to 32, except for the following block sizes 4x32,32x4, 8x32 and 32x8 for which the MIP2 is not used.

For blocks with both width and height up to 16, the MIP2 mode replaces the conventional intra modes of index 0, 1, and angular intra modes whose index can be written as 2+2*k, with k being an integer >=0.

For other blocks, MIP2 mode replaces the conventional intra modes of index 0, 1, and angular intra modes whose index can be written 2+4*k with k being an integer >=0.

In template-based intra prediction mode (TIMD, SGPM, TMRL), the MIP2 mode is not tested on the template. The default regular intra modes (i.e. angular intra modes) are tested. If the intra mode selected by the template analysis performed in these template-based intra prediction modes corresponds to a MIP2 mode then the MIP2 mode is eventually used in the prediction rather than the angular intra mode that was tested in template analysis. In other words, the template analysis stage is agnostic to the usage of MIP2. An angular intra mode can correspond to a MIP2 mode if the angular intra mode is mappable or can be mapped on a MIP2 mode based on the conditions mentioned above regarding the size of the block being encoded or decoded and the index of the angular intra mode considered.

The recent improvement in intra prediction, in block-vector based prediction and matrix-based prediction (MIP2), is not well exploited in the template analysis of DIMD and OBIC. For example, template analysis is fully based on angular intra modes where MIP2 is not used. The histogram yields angular intra modes without prior knowledge about their final use, whether as angular intra mode or MIP2.

In another example, for OBIC, when an occurrence of an index of an angular intra mode is counted in the histogram, it cannot be determined whether the reconstructed samples for which the index has been stored used an angular intra mode or a MIP2 mode.

However, MIP2 and angular intra modes cannot be considered as equivalent. Taking into account this difference in the histogram analysis could help to better predict the current block.

Some embodiments provide for adapting the histogram analysis to the intra prediction type. Namely, for an intra prediction mode that uses a histogram analysis, the histogram analysis can yield an angular mode that is ultimately replaced by a MIP2 mode in the prediction stage of the intra prediction mode, which leads to inconsistency in the design.

Some embodiments are provided herein to overcome the inconsistencies and improve the final prediction.

Some of the embodiments described herein relates to intra prediction. Any one of the embodiments described herein can be implemented for instance in an intra prediction module of a video encoder, for example 260 in FIG. 2 and intra prediction module of a video decoder, for example 360 in FIG.3.

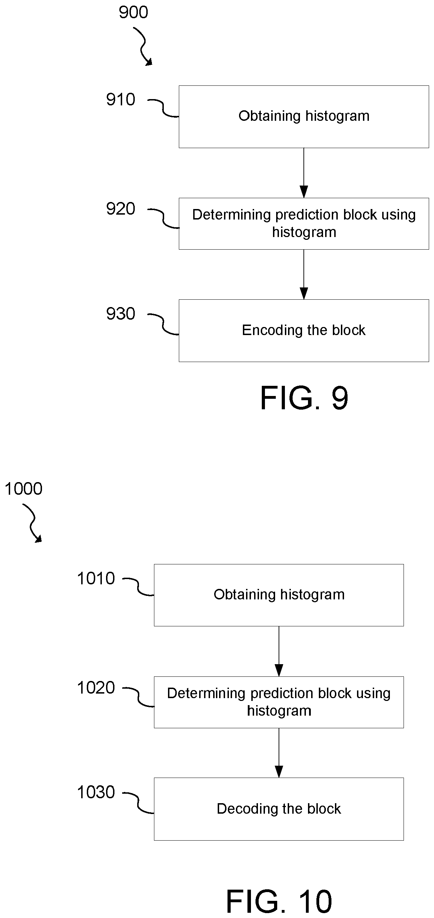

FIG. 9 illustrates an example of a method 900 for encoding a block of a video according to an embodiment. It is considered here that the block is to be encoded using an intra prediction mode that uses a histogram of angular intra modes occurrences for determining the prediction for the block, such as a DIMD or OBIC modes discussed above. However, the embodiments described in the document are not limited to these two intra prediction modes, the embodiments apply to any intra prediction mode that uses a histogram of angular intra modes occurrences for determining the prediction for the block.

In the following, the angular intra modes correspond to directional intra prediction modes (for example IPM with index 2 to 65 or higher), as well as planar and DC modes (indexed with 0 and 1) even though these two modes do not use directional intra prediction.

Also, in the following, the expression "regular angular intra mode" is used to distinguish between angular intra mode that are not mappable to a MIP2 mode from the ones that are mappable to a MIP2.

According to the embodiments provided herein, determining the prediction using the histogram of angular intra modes is based on determining whether or not one or more of the angular intra modes are mappable to a matrix-based intra mode (MIP2).

At 910, at least one histogram of angular intra modes occurrences is obtained. The obtention of the histogram depends on the intra prediction mode that is used. For example, as explained above, if the intra prediction mode is OBIC, the angular intra modes used by samples in the spatial neighborhood of the block are considered. If the intra prediction mode is DIMD, oriented gradients are determined from the template of the block and mapped to angular intra modes.

In some variants, at 910, when an angular intra mode is encountered for obtaining the histogram, the bin value of this angular intra mode in the histogram depends on determining whether or not the angular intra mode is mappable to a matrix-based intra mode (MIP2).

For example, an angular intra mode is mappable to a MIP2 when the angular intra mode belongs to a given set of angular intra modes. The given set of angular intra modes is either hard coded in the decoder or can be derive by the decoder. In the embodiments described in this document, it is assumed that the given set of angular intra modes is a set wherein each angular intra mode of the set is mappable to a MIP2 mode. In other words, the angular intra mode can be replaced by a MIP2 mode when the block prediction is obtained. For example, the angular intra modes of the given set satisfy a given condition. In some variants, the given condition is based on the index of the angular intra modes and/or on a range of sizes of the block to encode or decode.

In a variant, at 910, the fact that the angular intra mode is mappable to a MIP2 mode can be taken into account when creating the histogram (i.e. when counting the occurrences of the angular intra mode), or after the histogram has been created, by modifying the bin value of the angular intra mode, or imposing constraints in the selection of the final angular intra modes from the histogram.

In some variants, one histogram can be obtained for the intra prediction mode by considering only the angular intra modes that are not mappable to MIP2 modes and another histogram can be obtained for the intra prediction mode by considering only the angular intra modes that are mappable to MIP2 modes. In this way, the intra prediction mode can be used in two distinct modes and use one or the other of the two histograms and signals to the decoder which one is used for the prediction, for example using a flag. For example, at encoding side, rate-distortion optimization can be used to determine which histogram to use.

Once the histogram is obtained, at 920, a prediction block is determined for the block based on the histogram. One or more angular intra modes are selected using the histogram, for example by selecting a given number of the angular intra modes that have highest occurrences. The prediction block can be determined for example in a similar way as described above for DIMD or OBIC. In some variants, an angular intra mode is selected if its bin value is above a given value. In some variants, selecting one or more angular intra modes depends on determining whether or not the one or more angular intra modes are mappable to MIP2 modes. In other variants, obtaining the prediction block from the selected one or more angular intra modes is based on determining whether or not the one or more angular intra modes are mappable to MIP2 modes.

At 930, the block is encoded using the prediction block. For example, prediction residual is obtained, transformed, quantized and entropy encoded. In some variants, at 930, one or more syntax elements are also signaled to indicate for example one histogram to use when several histograms are available.

FIG. 10 illustrates an example of a method 1000 for decoding a block of a video according to an embodiment. For example, method 1000 decodes the block encoded according to any one of the variants described with FIG. 9. At 1010, a histogram is obtained in a similar manner as in FIG. 9, eventually using a flag indication whether the intra prediction mode uses angular intra modes that are mappable to a MIP2 mode or angular intra modes that are not mappable to a MIP2 modes. At 1020, a prediction block is obtained for the block based on the histogram and at 1030 the block is decoded/reconstructed using the prediction, and eventually a reconstructed prediction residual.

As explained above, depending on the variants used, obtaining the histogram or determining the prediction block is based on determining whether or not the one or more angular intra modes are mappable to MIP2 modes.

FIG.s 11-14 described below provide further details on the variants mentioned above.

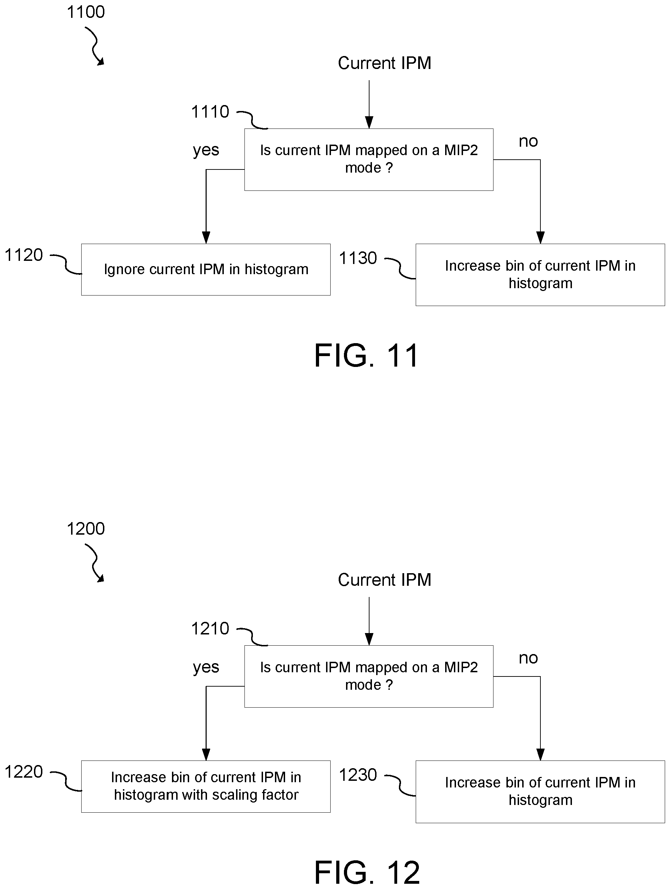

FIG. 11 illustrates an example of a method 1100 for obtaining a histogram of intra modes occurrences according to a variant wherein the histogram is restricted to proper angular intra modes, that is to angular intra modes that are not mappable to MIP2 modes. This variant can be used for example in steps 910 and 1010 of FIG.s 9 and 10.

As discussed above, MIP2 mode replaces some of regular intra modes for blocks having given dimensions. For example, MIP2 prediction is used for block size with both width and height up to 32 (except for 4x32,32x4, 8x32 and 32x8). For blocks with both width and height up to 16, the MIP2 mode replaces the conventional intra modes of index 0, 1, and (2+2*k). For other blocks, the MIP2 mode replaces the conventional intra modes of index 0, 1, and (2+4*k).

In this variant, the histogram is limited to the "proper" angular modes. The proper angular modes are the ones that will not be mapped to MIP2 modes. An interest of this variant is that it corrects the histogram analysis in the way that there is no difference between the analysis stage (histogram) and the prediction stage (DIMD/OBIC prediction) since no mapping of angular intra modes is later used in the prediction stage.

Let's considering a current angular intra mode (current IPM) encountered when creating the histogram. For example, the current IPM is an intra mode used by a neighboring block of the current block to encode or decode or an intra mode derived from an oriented gradient determined on a template of the current block to encode or decode. At 1110, it is checked whether or not the current IPM can be mapped on a MIP2 mode. This is done by looking at the size of the block which is being encoded or decoded and the index of the current IPM. If the current IPM is mappable to a MIP2 mode, then at 1120, the current IPM is ignored in the histogram, otherwise at 1030, the bin value of the current IPM is increased. For example, for OBIC, whenever taking the intra mode from a neighboring position of the block to be encoded/decoded, if the intra mode is mappable to a MIP2 mode, this intra mode ignored, i.e. not used in histogram calculation. For DIMD, when constructing the histogram of oriented gradient, if the orientation corresponds to an angular intra mode mappable to a MIP2 mode, this orientation is ignored in the calculation of the histogram.

As a consequence, the modified histogram calculation yields in a histogram of "pure" angular modes. This allows to provide intra prediction mode, such as OBIC or DIMD, wherein there is no difference between the analysis and prediction stages.

In another variant, the histogram bins can be penalized for the angular intra modes corresponding to MIP2 modes. Specifically, after constructing the histogram for the intra prediction mode (e.g. DIMD or OBIC), for every bin of an angular intra mode corresponding to a MIP2 mode, an attenuation factor is applied to the bin value. For example, the bin value is divided by two. The impact is that the histogram values corresponding to MIP2 are less selected and more focus is put on regular modes (angular intra modes not mappable to MIP2), which in turn results in less disparity between the analysis and the prediction stages. In an alternative, the bin value of an angular intra mode corresponding to a MIP2 mode is set to zero, and therefore not selected.

FIG. 12 illustrates an example of a method for obtaining a histogram of intra modes occurrences according to another variant wherein MIP2 modes are preferred, that is wherein the histogram is restricted to angular intra modes that are mappable to MIP2 modes. This variant can be used for example in steps 910 and 1010 of FIG.s 9 and 10. This variant is motivated by the fact that MIP2 seems a powerful tool for intra prediction compared to regular intra modes. Therefore, it can be beneficial to use MIP2 modes whenever possible, rather than corresponding regular angular intra modes. To do so, this variant allows to modify the histogram so that more focus is put on MIP2 modes.

Let's consider a current angular intra mode (current IPM) encountered when creating the histogram. For example, the current IPM is an intra mode used by a neighboring block of the current block to encode or decode or an intra mode derived from an oriented gradient determined on a template of the current block to encode or decode. At 1210, it is checked whether or not the current IPM can be mapped on a MIP2 mode. This is done by looking at the size of the block which is being encoded or decoded and the index of the current IPM. If the current IPM is mappable to a MIP2 mode, then at 1220, the bin of the current IPM is increased using a scaling factor applied to the increment value, otherwise at 1230, the bin value of the current IPM is increased by the normal increment value.

For example, for OBIC, whenever taking an intra mode from a neighboring position of the block to be encoded or decoded, it is checked if the intra mode is mappable to a MIP2 mode. If it is the case, the bin value of this intra mode is increased by a factor higher than the default one. For example, when the intra mode is not mappable to a MIP2 mode, the bin value of the intra mode is increased by HoC[IPM] += uiWidth * uiHeight (with uiWidth and uiHeight being the width and height of the neighboring block), otherwise the bin value of the intra mode is increased by HoC[IPM] += scaleFactor* (uiWidth * uiHeight), with scaleFactor being higher than 1.

For DIMD, when constructing the histogram of oriented gradient, if the orientation corresponds to an angular intra mode mappable to a MIP2 mode, the bin value of this angular intra mode is increased by a factor higher than the default one. For example, if the default increment is 1, the angular intra mode is increased by scaleFactor, with scaleFactor being higher than 1.

In other words, if an angular intra mode mappable to a MIP2 mode is encountered while constructing the histogram, higher weight is given to this angular intra mode than to regular intra modes that are not mappable to MIP2 modes. By default, the histogram value is increased by one. It can be then increased by 2 if MIP2 is encountered for example.

In an alternative variant, preferring MIP2 modes can be done after generating the histograms from OBIC or DIMD. For example, the final histogram is obtained classically for these modes. Then, the final histogram is examined. For any one of the 5 highest values of bins that correspond to an angular intra mode that is not mappable to a MIP2 mode, its value is compared to the bin value of its next angular intra mode that is mappable to a MIP2 mode. The angular intra modes that are counted in the histogram are ordered according to their index value (from 0 to 65 for example in the VVC standard) which as illustrated in FIG. 4 provides an order tat is correlated with the angle of orientations of the angular intra modes (for index from 2 to 65). A next angular intra mode is then an angular intra mode that is before or after the considered angular intra mode following this ordered sequence of indexes. The bin value of the next angular intra mode that is mappable to a MIP2 mode which is used in the comparison is the bin value of the closest angular intra mode mappable to a MIP2 mode encountered in the ordered sequence of indexes before and after the considered angular intra mode. In another variant, the bin value of the next angular intra mode is the one with the highest amplitude between the first angular intra mode encountered in the ordered sequence of indexes before and after the considered angular intra mode.

When the difference between the bin value of the considered angular intra mode and the next angular intra mode mappable to a MIP2 mode is less than a specified threshold, then the next angular intra mode mappable to a MIP2 mode is selected rather than the considered (regular) angular intra mode. In other words, the histogram output is overwritten to prefer angular intra modes mappable to MIP2 modes whenever their histogram value is not far from the regular one. If the threshold is put to zero, then DIMD/OBIC will always yield angular intra modes mappable to MIP2 modes.

In these variants, DIMD/OBIC final prediction would use more angular intra modes mappable to MIP2 modes rather than regular angular intra modes. This would lead to better prediction since MIP2 seems more powerful than their corresponding regular angular intra modes.

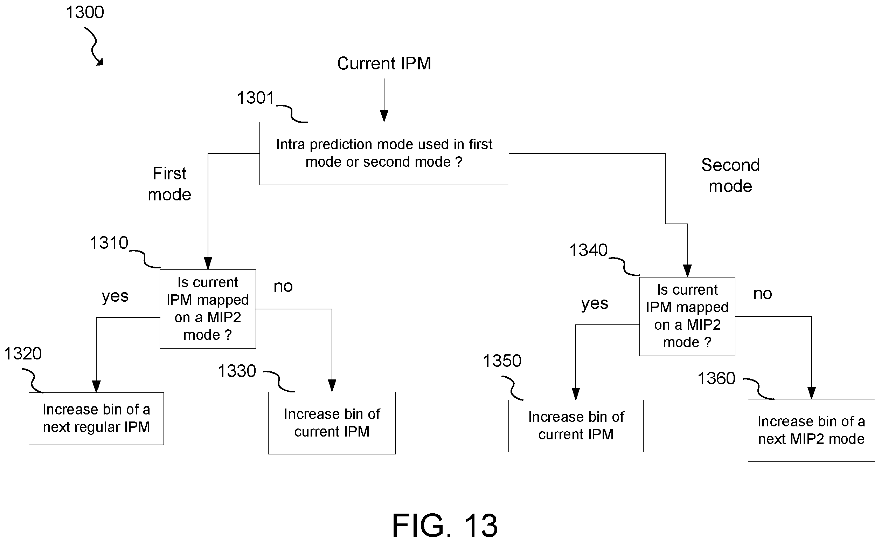

FIG. 13 illustrates an example of a method 1300 for obtaining a histogram of intra modes occurrences according to further variant, wherein new modes with MIP2 for the intra prediction mode that uses histogram, such as DIMD or OBIC are provided. In this variant, it is proposed to deal with angular intra modes mappable to MIP2 modes and regular angular intra modes by providing distinct modes for the intra prediction modes such as OBIC and DIMD. Specifically, it is proposed to distinguish two modes: a first mode of the intra prediction mode (e.g. DIMD or OBIC) with regular angular intra modes and a second mode of the intra prediction mode (e.g. DIMD or OBIC) with angular intra modes mappable to MIP2 modes. A flag is signaled to indicate which one of the first mode and the second mode is used. When the flag is zero, the intra prediction mode (e.g. DIMD or OBIC) is used in the first mode (with regular angular intra modes). Otherwise, the intra prediction mode (e.g. DIMD or OBIC) is used in the second mode (with angular intra modes mappable to MIP2 modes). The two modes are distinguished by their histogram construction as follows.

Let's consider a current angular intra mode (current IPM) encountered when creating the histogram. For example, the current IPM is an intra mode used by a neighboring block of the current block to encode or decode or an intra mode derived from an oriented gradient determined on a template of the current block to encode or decode. At 1301, it is determined whether the intra prediction mode (e.g. DIMD or OBIC) is used in the first mode or the second mode. If the intra prediction mode is use in the first mode, (for example the flag is zero), at 1310, it is checked whether the current IPM is mappable to a MIP2 mode. If this is the case, then at 1320, the bin of a next regular angular intra mode of the current IPM is increased, otherwise at 1330, the bin of current IPM is increased.

For example, for OBIC, whenever taking the intra mode from a neighboring position of a current block to encode or decode, it is checked if the intra mode is mappable to a MIP2 mode. If it is the case, the next regular angular intra mode is selected, and the corresponding bin value is increased.

For DIMD, when constructing the histogram of oriented gradient, if the orientation corresponds to an angular intra mode mappable to a MIP2 mode, the next regular angular intra mode is selected, and the corresponding bin value is increased.

Otherwise, if at 1301, it is determined that the intra prediction mode (e.g. DIMD or OBIC) is used in the second mode (e.g. the flag is one), then at 1340, it is checked whether the current IPM is mappable to a MIP2 mode. If this is the case, then at 1350, the bin of the current IPM is increased, otherwise at 1360, the bin of a next angular intra mode mappable to a MIP2 mode is increased.

For example, for OBIC, whenever taking the intra mode from a neighboring position of the current block to encode or decode, it is checked if the intra mode is not mappable to MIP2. If it is the case (intra mode not mappable to MIP2 mode), the next angular intra mode mappable to a MIP2 mode is selected, and the corresponding bin value is increased.

For DIMD, when constructing the histogram of oriented gradient, if the orientation does not correspond to an angular intra mode mappable to a MIP2 mode, the next angular intra mode mappable to a MIP2 mode is selected, and the corresponding bin value is increased.

In this variant, the histograms are different depending on the signaled flag. If the flag is zero for example, the intra prediction modes such as DIMD or OBIC will certainly not use any angular intra modes mappable to MIP2 modes and vice versa. This creates some diversity and allow the encoder to choose the best modes to blend from angular intra modes mappable to MIP2 modes and regular angular intra modes.

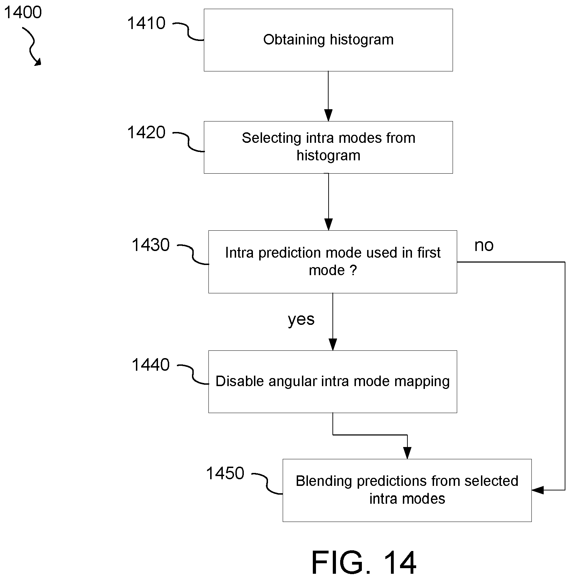

FIG. 14 illustrates another variant of the embodiment wherein new modes with MIP2 for the intra prediction mode that uses histogram, such as DIMD or OBIC are provided. The method 1400 of FIG. 14 provides for obtaining a prediction block in an intra prediction mode that uses a histogram of intra modes occurrences, based on determining whether the intra prediction mode is used on the first mode or the second mode. In this variant, the histograms for the intra prediction modes (e.g. OBIC or DIMD) are not modified when the flag is zero. Rather, the prediction is modified to use the regular prediction instead of MIP2. In other words, the mapping of regular angular intra mode to a MIP2 mode is disable in the intra prediction mode (e.g. OBIC or DIMD) when the flag is zero. This guarantees that MIP2 is not used when the flag is zero, while it is only used when the flag is one. For example at 1410, the histogram is obtained using the classical method when the intra prediction mode is in the first mode (using regular angular intra modes). If the intra prediction mode is in the second mode (using angular intra modes mappable to MIP2 modes), the histogram can be obtained using one of the variants described above in relation with FIG. 12 or classically. At 1420, one or more angular intra modes are selected based on the histogram, for example the ones that have highest bin values. At 1430, it is checked whether the intra prediction mode is used in the first mode or the second mode. If the intra prediction mode is used in the first mode, then at 1440, the mapping of the angular intra modes to MIP2 modes is disabled. At 1450, the predictions from the selected intra modes are obtained and blended to obtain the final prediction block.

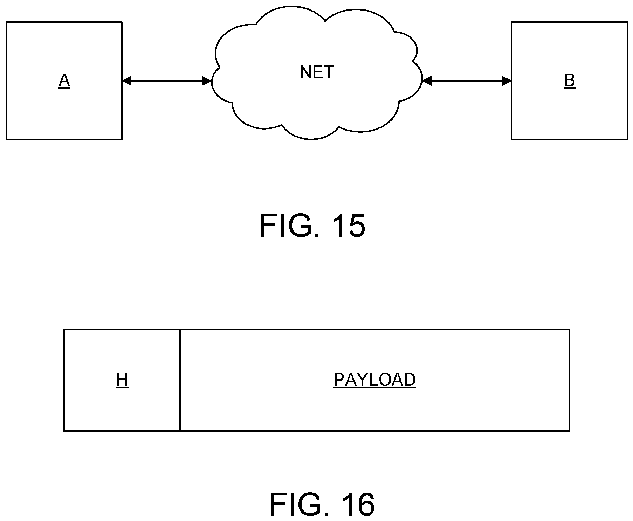

In an embodiment, illustrated in FIG. 15, in a transmission context between two remote devices A and B over a communication network NET, the device A comprises a processor in relation with memory RAM and ROM which are configured to implement a method for encoding an image or a video according to any one of the embodiments described herein and the device B comprises a processor in relation with memory RAM and ROM which are configured to implement a method for decoding an image or a video according to any one of the embodiments described herein. In accordance with an example, the network is a broadcast network, adapted to broadcast/transmit a coded video from device A to decoding devices including the device B.

FIG. 16 shows an example of the syntax of a signal transmitted over a packet-based transmission protocol. Each transmitted packet P comprises a header H and a payload PAYLOAD. In some embodiments, the payload PAYLOAD may comprise data representative of an image or a video encoded according to any one of the embodiments described above. The payload can also comprise any signaling as described above. For example, the signal comprises a flag indicating whether a block of the image or video is encoded using an intra prediction block in a first mode that uses regular angular intra modes or in a second mode that uses angular intra modes mapped to matrix-based intra modes.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, entropy decoding a sequence of binary symbols to reconstruct image or video data.

As further examples, in one embodiment "decoding" refers only to entropy decoding, in another embodiment "decoding" refers only to differential decoding, and in another embodiment "decoding" refers to a combination of entropy decoding and differential decoding, and in another embodiment "decoding" refers to the whole reconstructing picture process including entropy decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining re-sampling filter coefficients, re-sampling a decoded picture.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

This disclosure has described various pieces of information, such as for example syntax, that can be transmitted or stored, for example. This information can be packaged or arranged in a variety of manners, including for example manners common in video standards such as putting the information into an SPS, a PPS, a NAL unit, a header (for example, a NAL unit header, picture header or a slice header), or an SEI message. Other manners are also available, including for example manners common for system level or application level standards such as putting the information into one or more of the following:
a. SDP (session description protocol), a format for describing multimedia communication sessions for the purposes of session announcement and session invitation, for example as described in RFCs and used in conjunction with RTP (Real-time Transport Protocol) transmission.
b. DASH MPD (Media Presentation Description) Descriptors, for example as used in DASH and transmitted over HTTP, a Descriptor is associated to a Representation or collection of Representations to provide additional characteristic to the content Representation.
c. RTP header extensions, for example as used during RTP streaming.
d. ISO Base Media File Format, for example as used in OMAF and using boxes which are object-oriented building blocks defined by a unique type identifier and length also known as 'atoms' in some specifications.
e. HLS (HTTP live Streaming) manifest transmitted over HTTP. A manifest can be associated, for example, to a version or collection of versions of a content to provide characteristics of the version or collection of versions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Some embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

A number of embodiments has been described above. Features of these embodiments can be provided alone or in any combination, across various claim categories and types.

## Claims

1. A method, comprising, for at least one block of a video:
obtaining at least one histogram of angular intra modes occurrences, wherein for at least one angular intra mode, a bin value for the at least one angular intra mode in the at least one histogram depends on determining whether or not the at least one angular intra mode is mappable to a matrix-based intra mode,
determining a prediction block for the block based on an intra prediction mode that uses the at least one histogram,
decoding the block using the prediction block.

2. An apparatus comprising one or more processors operable to, for at least one block of a video:
obtain at least one histogram of angular intra modes occurrences, wherein for at least one angular intra mode, a bin value for the at least one angular intra mode in the at least one histogram depends on determining whether or not the at least one angular intra mode is mappable to a matrix-based intra mode,
determine a prediction block for the block based on an intra prediction mode that uses the at least one histogram,
decode the block using the prediction block.

3. The method of claim 1 or the apparatus of claim 2, wherein obtaining the at least one histogram is based on a flag indicating whether or not the intra prediction mode is used in a first mode that uses regular angular intra modes or in a second mode that uses angular intra modes mapped to matrix-based intra modes.

4. The method or the apparatus of claim 3, wherein if the flag indicates that the intra prediction mode is used in the first mode and if the at least one angular intra mode is mappable to a matrix-based intra mode, a bin value of a next angular intra mode in the histogram that is not mappable to a matrix-based intra mode is increased.

5. The method or the apparatus of claim 3 or 4, wherein if the flag indicates that the intra prediction mode is used in the second mode and the at least one angular intra mode is not mappable to a matrix-based intra mode, a bin value of a next angular intra mode in the histogram that is mappable to a matrix-based intra mode is increased.

6. The method or the apparatus of any one of claims 3-5, wherein:
determining the prediction block comprises selecting one or more angular intra modes based on the at least one histogram, and
if the flag indicates that the intra prediction mode is used in the first mode and a selected angular intra mode is mappable to a matrix-based intra mode, the selected angular intra mode is not mapped to the matrix-based intra mode for determining the prediction block.

7. The method or the apparatus of any one of claims 3-6, wherein the flag is decoded at a block level.

8. The method of claim 1 or the apparatus of claim 2, wherein if it is determined that the at least one angular intra mode is mappable to a matrix-based intra mode, the at least one angular intra mode is ignored when obtaining the at least one histogram.

9. The method of claim 1 or the apparatus of claim 2, wherein if it is determined that the at least one angular intra mode is mappable to a matrix-based intra mode, a bin value in the at least one histogram obtained for the at least one angular intra mode is scaled by an attenuation factor.

10. The method of claim 1 or the apparatus of claim 2, wherein if it is determined that the at least one angular intra mode is mappable to a matrix-based intra mode, a bin value in the at least one histogram for the at least one angular intra mode is increased by more than 1 when obtaining the at least one histogram.

11. The method of claim 1 or the apparatus of claim 2, wherein if the at least one angular intra mode has a bin value in the obtained histogram that is one of a given number of highest bin values in the obtained histogram, and the at least one angular intra mode is not mappable to a matrix-based intra mode, and if a difference between the bin value of the at least one angular intra mode and a bin value of a next angular intra mode mappable to a matrix-based intra mode is less than a given value, the next angular intra mode mappable to a matrix-based intra mode is used instead of the at least one angular intra mode in the determining of the prediction block.

12. The method of any one of claims 1 or 3-11 or the apparatus of any one of claims 2-11, wherein the at least one histogram is obtained by counting sample-wise occurrences of angular intra modes used in a neighborhood of the at least one block.

13. The method of any one of claims 1 or 3-11 or the apparatus of any one of claims 2-11, wherein the at least one histogram is obtained by deriving gradients in a template of reconstructed neighbor samples of the at least one block and mapping the derived gradients to angular intra modes.

14. The method of any one of claims 1, or 3-13 or the apparatus of any one of claims 2-13, wherein an angular intra mode is mappable to a matrix-based intra mode if the angular intra mode satisfies a given condition.

15. The method or the apparatus of claim 14, wherein the given condition is based on an index of the angular intra mode.

16. The method or the apparatus of claim 14 or 15, wherein the angular intra mode is mappable to the matrix-based intra mode if the at least one block is among a given range of block sizes.
